# EUROPEAN PATENT SPECIFICATION

(11) **EP 2 503 712 B1**
(45) Date of publication and mention of the grant of the patent: **17.08.2016**
(21) Application number: 11290141.8
(22) Date of filing: 18.03.2011
(51) Int. Cl.: H04B 10/291

(54) **HYBRID ELECTRICAL/OPTICAL SPLITTING OEO PON**
HYBRIDES ELEKTRISCH/OPTISCH TEILENDES, PASSIVES OPTISCHES OEO-NETZWERK
PON OEO DE SÉPARATION HYBRIDE ÉLECTRIQUE/OPTIQUE

(43) Date of publication of application: 26.09.2012
(73) Proprietor: ALCATEL LUCENT, 92100 Boulogne-Billancourt (FR)
(72) Inventor: Pöhlmann, Wolfgang, 71282 Hemmingen (DE); Chen, Young-Kai, 07922 Berkeley Heights, NJ (US)
(74) Representative: Wetzel, Emmanuelle

(56) References cited:
- EP-A2- 2 247 118
- KWANG-OK KIM ET AL: "Design of a Hybrid PON System for GPON Reach Extension on the Basis of Colorless DWDM-PON and 3R Regenerator", GLOBECOM 2010, 2010 IEEE GLOBAL TELECOMMUNICATIONS CONFERENCE, IEEE, PISCATAWAY, NJ, USA, 6 December 2010 (2010-12-06), pages 1-4, XP031845713, ISBN: 978-1-4244-5636-9
- FRANK J EFFENBERGER ET AL: "Standardization trends and prospective views on the next generation of broadband optical access systems", IEEE JOURNAL ON SELECTED AREAS IN COMMUNICATIONS, IEEE SERVICE CENTER, PISCATAWAY, US, vol. 28, no. 6, 1 August 2010 (2010-08-01) , pages 773-780, XP011314136, ISSN: 0733-8716
- KWANG-OK KIM ET AL: "Implementation of OEO based reach extender for 60km long reach GPON", OPTICAL INTERNET (COIN), 2010 9TH INTERNATIONAL CONFERENCE ON, IEEE, PISCATAWAY, NJ, USA, 11 July 2010 (2010-07-11), pages 1-3, XP031730990, ISBN: 978-1-4244-7181-2
- DAVEY R P ET AL: "Long-Reach Passive Optical Networks", JOURNAL OF LIGHTWAVE TECHNOLOGY, IEEE SERVICE CENTER, NEW YORK, NY, US, vol. 26, no. 3, 1 February 2009 (2009-02-01), pages 273-291, XP011251723, ISSN: 0733-8724

## Description

The present document relates to optical transmission systems. In particular, the present document relates to a reach extender for passive optical networks (PON).

Current Passive Optical Networks (PON) typically comprise a relatively long feeder fiber, a passive optical splitter and a plurality of shorter drop fibers. The reach and splitting ratio of a PON is limited. If the reach and splitting ratio of such PONs is to be increased, special midspan reach extenders may be used.

For reach extension of such PONs (e.g. GPONs) either optical amplifiers or Optical/Electrical/Optical reach extenders (e.g. according to ITU-T G.984.6) may be used. These devices typically have one input port, e.g. for the feeder fiber, and one output port. The optical power splitter is typically connected to the output port of a reach extender. The fact that the optical power splitter is connected to the output port of the reach extender may limit the achievable optical budget. In order to increase the achievable optical budget an electrically splitting OEO (optical-electrical-optical) converter may be used. This device makes the splitting in the electrical regime and uses point to point links for the drop section. With this approach the splitting factor is theoretically infinite and the optical budget is increased as well. These electrically splitting OEOs are protocol agnostic and are typically doing 2R regeneration (i.e. re-amplification and re-shaping of the signal). On the other hand, electrically splitting OEO converters tend to be relatively cost intensive.

EP2247118A1 describes an Optical/Electrical/Optical reach extender comprising a measuring unit for measuring a transmission distance or time to a child station and a determining unit for determining a timing when a child station transmits a signal and a signal processing unit for processing a signal received from a child station.

The present document describes a cost effective reach extender for passive optical networks which allows for an increased optical budget.

According to an aspect, a point to multipoint (ptmp) reach extender, e.g. an optical-electrical-optical (oeo) extender, for a passive optical network is described. The extender may be used in passive optical networks (PON) such as Gigabit PON (GPON) or wavelength division multiplex (WDM) PON. Such a PON may comprise an optical line terminal (OLT) at a network side, e.g. at a central office of the network provider. Furthermore, the PON may comprise a plurality of optical network terminals (ONT) or optical network units (ONU) at a customer premise side. In addition, the PON may comprise a feeder optical transmission channel, e.g. a feeder fiber, linked to the OLT, as well as a plurality of drop optical transmission channels, e.g. a plurality of drop fibers, linked to the plurality of ONTs, respectively.

The extender may comprise a point-to-point (ptp) optical amplifier, e.g. an optical-electrical-optical (oeo) converter, configured to amplify an optical downlink feeder signal on the feeder optical transmission channel on the downlink from the OLT to the plurality of ONTs, thereby yielding an amplified optical downlink signal. In other words, on the downlink from the OLT to the plurality of ONTs, the downlink feeder signal on the feeder optical transmission channel (e.g. on the feeder fiber) may be amplified by a ptp optical amplifier. Such amplification may be performed prior to the splitting of the amplified optical downlink feeder signal towards the plurality of ONTs.

The extender may comprise a multipoint-to-point (mptp) optical amplifier and multiplexer, e.g. an optical-electrical-optical (oeo) converter, configured to amplify and/or multiplex a plurality of optical uplink drop signals on an uplink from the plurality of optical network terminals to the optical line terminal. In other words, on an uplink direction of the PON from the plurality of ONTs towards the OLT, the plurality of optical uplink drop signals on the respective plurality of drop optical transmission channels may be amplified and/or multiplexed in order to provide an uplink feeder signal on the uplink of the feeder optical transmission channel to the OLT.

The extender may further comprise a point-to-multipoint passive optical splitter configured to distribute the amplified optical downlink feeder signal to the plurality of ONTs, thereby yielding a plurality of optical downlink drop signals. This means that on the downlink direction of the PON, the optical downlink feeder signal may be optically amplified prior to being optically split into a plurality of optical downlink drop signals which are provided to the respective plurality of ONTs.

The extender may further comprise a plurality of diplexers configured to multiplex the plurality of optical downlink drop signals onto the plurality of drop optical transmission channels, e.g. the plurality of optical drop fibers, to the respective plurality of optical network terminals. In addition, the plurality of diplexers may be configured to de-multiplex the plurality of optical uplink drop signals from the plurality of drop optical transmission channels, respectively. The diplexers may be implemented as optical filters configured to isolate and/or merge the wavelength range of the plurality of optical downlink drop signals, as well as the wavelength range of the plurality of optical uplink drop signals. By way of example, the wavelength range of the plurality of optical downlink drop signals may be 1480nm to 1500nm and the wavelength range of the plurality of optical uplink drop signals may be 1290nm to 1330nm.

The point-to-multipoint passive optical splitter and the plurality of diplexers may be implemented on a common photonic lightwave circuit (PLC) or a common photonic integrated circuit (PIC). The PLC or PIC may be a passive photonic circuit.

The ptp optical amplifier on the downlink, e.g. the point-to-point optical-electrical-optical converter, may comprise an optical-to-electrical (OE) converter configured to convert the optical downlink feeder signal to an electrical downlink feeder signal. Such an OE converter may be implemented as a photodiode. The electrical downlink feeder signal may be re-amplified and/or re-shaped within the ptp optical amplifier. Furthermore, the ptp optical amplifier, e.g. the point-to-point optical-electrical-optical converter, may comprise a laser configured to convert the (amplified and/or reshaped) electrical downlink feeder signal to the amplified optical downlink feeder signal. The laser may be a distributed feedback laser.

As such, the extender may comprise a ptp optical amplifier followed by an optical splitter on the downlink direction of the PON from the OLT to the plurality of ONTs. Such a configuration is particularly cost efficient for the optical downlink feeder signal which is broadcasted to the plurality of ONTs, while providing the optical budgets required for typical PONs.

The mptp optical amplifier and multiplexer, e.g. the multipoint-to-point optical-electrical-optical converter, on the uplink from the plurality of ONTs to the OLT may comprise a plurality of OE converters configured to convert the plurality of optical uplink drop signals to a plurality of electrical uplink drop signals. The plurality of OE converters may be a plurality of photodiodes, e.g. PIN diodes.

The mptp optical amplifier and multiplexer, e.g. the multipoint-to-point optical-electrical-optical converter, may further comprise a multiplexer configured to multiplex the plurality of electrical uplink drop signals onto an electrical uplink feeder signal. Furthermore, the mptp optical amplifier and multiplexer may perform re-amplification and re-shaping of the plurality of electrical uplink drop signals and/or of the electrical uplink feeder signal. In addition, the mptp optical amplifier and multiplexer, e.g. the multipoint-to-point optical-electrical-optical converter, may comprise an electrical-to-optical converter configured to convert the electrical uplink feeder signal into an optical uplink feeder signal on the uplink of the feeder optical transmission channel to the optical line terminal.

As such, the extender may comprise a mptp optical amplifier and multiplexer comprising an electrical multiplexer on the uplink from the plurality of ONTs to the OLT. This is a cost efficient approach to providing the required optical budget for the plurality of optical uplink drop signals from the plurality of ONTs to the OLT.

Overall, a reach extender is described which may use optical splitting on the downstream of the PON from the OLT to the plurality of ONTs and electrical multiplexing on the upstream of the PON from the plurality of ONTs to the OLT.

According to a further aspect, a passive optical network is described. The PON may comprise an optical line terminal and a plurality of optical network terminals. Furthermore, the PON may comprise a reach extender according to any of the features and aspects outlined in the present document. The reach extender may be positioned downstream of the optical line terminal and upstream of the plurality of optical network terminals.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The claimed subject-matter is explained below in an exemplary manner with reference to the accompanying drawings, wherein
Fig. 1 illustrates example PONs comprising Optical/Electrical/Optical reach extenders; and
Fig. 2 illustrates an example hybrid reach extender for passive optical networks.

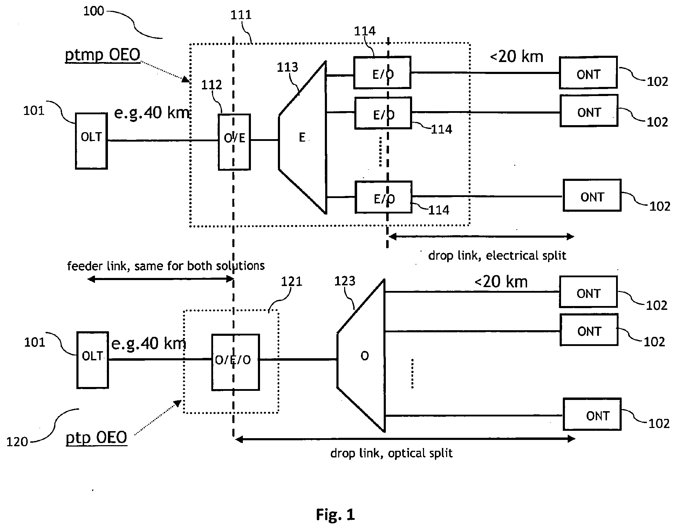

Fig. 1 illustrates two example passive optical networks comprising Optical/Electrical/Optical reach extenders. The upper network 100 comprises a point-to-multi-point OEO extender 111, which comprises an electrical splitting unit 113. The point-to-multi-point OEO extender 111 links the optical line terminal (OLT) 101 with a plurality of optical network terminals (ONT) 102. The OLT 101 is connected to an O/E converter 112 of the point-to-multi-point OEO extender 111. The O/E converter 112 performs an optical-to-electrical conversion on the downlink from the OLT 101 to the plurality of ONTs 102. Furthermore, the O/E converter 112 performs an electrical-to-optical conversion on the uplink from the plurality of ONTs 102 to the OLT 101.

In a similar manner, each of the ONTs 102 is connected to an E/O converter 114 of the point-to-multi-point OEO extender 111 via a respective drop fiber. The E/O converter 114 performs an electrical-to-optical conversion on the downlink from the OLT 101 to the respective ONT 102. Furthermore, the E/O converter 114 performs an optical-to-electrical conversion on the uplink from the respective ONT 102 to the OLT 101.

As already indicated above, the point-to-multi-point OEO extender 111 also comprises an electrical splitting unit 113 which is configured to pass the electrical signal on the downlink from the OLT 101 to the plurality of ONTs 102 to each of the plurality of ONTs 102. Furthermore, the electrical splitting unit 113 is configured to multiplex the plurality of electrical signals on the uplink from the respective plurality of ONTs 102 to the OLT 101 onto a single electrical signal entering the O/E converter 112.

Fig. 1 also illustrates a PON 120 comprising a point-to-point O/E/O reach extender 121. The point-to-point O/E/O reach extender 121 is positioned on the feeder fiber between the OLT 101 and the optical splitter 123. The point-to-point O/E/O reach extender 121 is configured to amplify an optical signal on the downlink and/or on the uplink between the OLT 101 and the plurality of ONTs 102.

The electrical splitting OEO approach used in network 100 of Fig. 1 has the disadvantage of using nearly double as many OE conversion modules 112, 114 than the optical splitting approach of network 120 of Fig. 1. This could be challenging with regards to the cost of the overall PON system. A possible approach to cost reduction could be to reduce the cost of the optical modules by using lower performance transmitters and receiver, e.g. PIN diodes instead of APDs (avalanche photodiodes) and low power lasers instead of high power lasers in the electrically splitting OEO and in the ONTs. Furthermore, the relatively high number of additional components required for a point-to-multimode OEO reach extender 111 limits the overall possibilities for cost reduction.

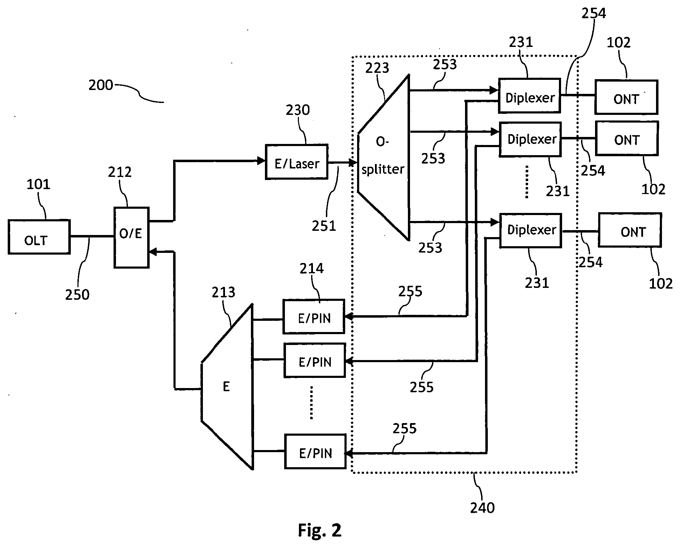

In order to allow for a cost reduction, while keeping a good optical link budget and splitting ratio, the present document suggests a modified architecture of a splitting OEO reach extender. In particular, a hybrid electrical and optical splitting OEO solution 200 is proposed and described in the context of Fig. 2. The OEO reach extender solution 200 of Fig. 2 allows for a reduction of the number of required components and thereby allows for cost reduction while keeping a high performance with regards to the optical link budget and the achievable splitting ratio.

It should be noted that even a low cost and low power laser has an output power in the range of 1mW. Low cost PIN diode receivers for GPON downstream traffic (2.5Gbit/s) used within the ONTs 102 have sensitivities of about -18dBm. Typical lengths of the drop fibers between the splitter and the ONTs 102 are less than 10km which corresponds to less than 4dB attenuation. This means that even when using low cost and low power lasers within the E/O converters 114 on the downlink from the OLT 101 to an ONT 102, the components on the point-to-point link between E/O converter 114 and ONT 102 are much too powerful for the required point-to-point reach of the downstream broadcating. Consequently, for the downstream direction from the OLT 101 to the plurality of ONTs 102, one laser could be sufficient for performing the reach extension. In particular, one low cost laser may be sufficient to transmit the optical signal on the downstream to approx. 8-16 ONTs. This means that one downstream laser 230 may be shared using optical power splitters 223 for approx. 8-16 ONTs.

In other words, the point-to-multi-point OEO reach extender 111 may be replaced by a point-to-point OEO reach extender 121 on the downlink from the OLT 101 to the plurality of ONTs 102. This means that an optical signal on the feeder fiber 250 on the downlink may be amplified by an OEO reach extender comprising an O/E converter 212 configured to convert the optical downlink signal into an electrical downlink signal, and an E/O converter 230 (e.g. a laser) configured to convert the electrical downlink signal into an amplified optical downlink signal 251. As a result of such point-to-point OEO reach extension, the optical signal on the downlink may be 2R regenerated prior to entering the optical splitter 223 which splits the optical signal 251 into a plurality of optical drop signals 253 on the downlink towards the respective plurality of ONTs 102.

In the upstream direction, the use of a single O/E converter (similar to the O/E converter in the point-to-point OEO reach extender 121) may not be useful, because this would require the use of relatively sophisticated burst mode receiver capabilities. As such, it is suggested to feed the plurality of ONTs 102 (e.g. approx 8-16 ONTs) on the upstream link to separate PIN receivers 214 in the hybrid OEO reach extender 200. In other words, it is proposed to use a point-to-multi-point OEO reach extender 111 on the uplink from the plurality of ONTs 102 to the OLT 101. As such, the plurality of optical upstream signals 255 may be converted into a plurality of electrical signals which may be multiplexed by the electrical multiplexer 213. The electrically multiplexed signal may then be converted by the O/E converter 212 into an optical upstream signal on the feeder fiber 250 towards the OLT 101.

This means that the hybrid scenario 200 of Fig. 2 requires only few additional optical components compared to a PON without any reach extender. In particular, just one low cost PIN receiver 214 is required on the upstream direction and only a fraction, e.g. 1/8 or 1/16, of a laser 230 is required on the downstream.

Up and downstream links may be combined using a diplexer 231. In particular, the diplexer 231 may combine and/or separate the downstream optical signal 253 and the upstream optical signal 255 to and/or from the drop fiber 254.

The above mentioned approach is especially attractive, if optical integration on a photonic integrated circuit (PIC) may be used. In particular, the optical splitter 223 and the plurality of diplexers 231 may be implemented on a joint PIC 240.

In the present document a reach extender for a PON has been described which allows a high splitting ratio and/or optical budget at little additional cost. The described electrically splitting OEO repeater is cost optimized without impairing the performance compared to conventional OEO repeater solutions.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

In addition, it should be noted that the functions of the various elements described in the present patent document may be provided through the use of dedicated hardware as well as hardware capable of executing software in association with appropriate software.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A point to multipoint reach extender (200) for a passive optical network, comprising
- a point-to-point optical amplifier (212, 230) adapted to amplify an optical downlink feeder signal at an input of the point-to-point optical amplifier (212, 230) on a feeder optical transmission channel (250) on a downlink from an optical line terminal (101) to a plurality of optical network terminals (102), thereby yielding an amplified optical downlink feeder signal (251) at an output of the point-to-point optical amplifier (212, 230); and
- a multipoint-to-point optical-electrical-optical converter (214, 213, 212) comprising an electrical multiplexer (213), wherein the multipoint-to-point optical-electrical-optical converter (214, 213, 212) is adapted to amplify and multiplex a plurality of optical uplink drop signals (255) at a corresponding plurality of inputs of the multipoint-to-point optical-electrical-optical converter (214, 213, 212) on an uplink from the plurality of optical network terminals (102) to the optical line terminal (101) to provide an optical uplink feeder signal at an output of the multipoint-to-point optical-electrical-optical converter (214, 213, 212) on an uplink of the feeder optical transmission channel (250) to the optical line terminal (101).

2. The extender (200) of claim 1, further comprising
- a point-to-multipoint passive optical splitter (223) adapted to distribute the amplified optical downlink feeder signal (251) to the plurality of optical network terminals (102), thereby yielding a plurality of optical downlink drop signals (253).

3. The extender (200) of claim 2, further comprising
- a plurality of diplexers (231) adapted to multiplex the plurality of optical downlink drop signals (253) onto a plurality of drop optical transmission channels (254) to the respective plurality of optical network terminals (102), respectively.

4. The extender (200) of claim 3, wherein the plurality of diplexers (231) is further adapted to de-multiplex the plurality of optical uplink drop signals (255) from the plurality of drop optical transmission channels (254), respectively.

5. The extender (200) of any of claims 3 to 4, wherein the point-to-multipoint passive optical splitter (223) and the plurality of diplexers (231) are implemented on a common photonic lightwave circuit (240).

6. The extender (200) of any previous claim, wherein the point-to-point optical amplifier (212, 230) is a point-to-point optical-electrical-optical converter (212, 230) comprising an optical-to-electrical converter (212) adapted to convert the optical downlink feeder signal to an electrical downlink feeder signal.

7. The extender (200) of claim 6, wherein the point-to-point optical-electrical-optical converter (212, 230) further comprises a laser (230) adapted to convert the electrical downlink feeder signal to the amplified optical downlink feeder signal (251).

8. The extender (200) of claim 7, wherein the laser (230) is a distributed feedback laser.

9. The extender (200) of any previous claim, wherein the multipoint-to-point optical-electrical-optical converter (214, 213, 212) comprises a plurality of photodiodes (214) adapted to convert the plurality of optical uplink drop signals (255) to a plurality of electrical uplink drop signals.

10. The extender (200) of claim 8, wherein the plurality of photodiodes (214) are PIN diodes.

11. The extender (200) of any of claims 9 to 10, wherein the electrical multiplexer (213) of the multipoint-to-point optical-electrical-optical converter (214, 213, 212) is adapted to multiplex the plurality of electrical uplink drop signals onto an electrical uplink feeder signal.

12. The extender (200) of claim 11, wherein the multipoint-to-point optical-electrical-optical converter (214, 213, 212) further comprises an electrical-to-optical converter (212) adapted to convert the electrical uplink feeder signal into the optical uplink feeder signal on the uplink of the feeder optical transmission channel (250) to the optical line terminal (101).

13. The extender (200) of any previous claim, wherein the optical transmission channel (250) is an optical fiber.

14. The extender (200) of any previous claim, wherein the point-to-point optical amplifier (212, 230) and the multipoint-to-point optical-electrical-optical converter (214, 213, 212) are adapted to perform signal re-shaping.

15. A passive optical network comprising:
- an optical line terminal (101);
- a plurality of optical network terminals (102); and
- a reach extender (200) according to any of the claims 1 to 14, positioned downstream of the optical line terminal (101) and upstream of the plurality of optical network terminals (102).

## Patentansprüche

1. Ein Punkt-zu-Mehrpunkt-Reichweiten-Extender (200) für ein passives optisches Netzwerk, umfassend
- einen optischen Punkt-zu-Punkt-Verstärker (212, 230), angepasst zum Verstärken eines optischen Downlink-Einspeisesignals an einem Eingang des optischen Punkt-zu-Punkt-Verstärkers (212, 230) auf einem optischen Einspeiseübertragungskanal (250) beim Downlink von einem optischen Leitungsendgerät (101) zu einer Vielzahl von optischen Netzwerkendgeräten (102), unter Erzielen eines verstärkten optischen Downlink-Einspeisesignals (251) an einem Ausgang des optischen Punkt-zu-Punkt-Verstärkers (212, 230); und
- einen Mehrpunkt-zu-Punkt Optisch-Elektrisch-Optisch-Wandler (214, 213, 212), umfassend einen elektrischen Multiplexer (213), wobei der Mehrpunkt-zu-Punkt Optisch-Elektrisch-Optisch-Wandler (214, 213, 212) dazu ausgelegt ist, eine Vielzahl von optischen Uplink-Drop-Signalen (255) einer entsprechenden Vielzahl von Eingängen des Mehrpunkt-zu-Punkt Optisch-Elektrisch-Optisch-Wandlers (214, 213, 212) an einem Uplink von der Vielzahl von optischen Netzwerkendgeräten (102) zum optischen Leitungsendgerät (101) zu verstärken und zu vervielfachen, um ein optisches Uplink-Einspeisesignal an einem Ausgang des Mehrpunkt-zu-Punkt Optisch-Elektrisch-Optisch-Wandlers (214, 213, 212) an einem Uplink des optischen Einspeiseübertragungskanals (250) zum optischen Leitungsendgerät (101) bereitzustellen.

2. Extender (200) nach Anspruch 1, weiterhin umfassend
- einen passiven optischen Punkt-zu-Mehrpunkt-Splitter (223), dazu ausgelegt, das verstärkte optische Downlink-Einspeisesignal (251) auf die Vielzahl von optischen Netzwerkendgeräten (102) zu verteilen und dabei eine Vielzahl von optischen Downlink-Drop-Signalen (253) zu erzielen.

3. Extender (200) nach Anspruch 2, weiterhin umfassend
- eine Vielzahl von Frequenzweichen (231), die ausgelegt sind, um jeweils die Vielzahl von optischen Downlink-Drop-Signalen (253) auf einer Vielzahl von optischen Drop-Übertragungskanälen (254) auf die jeweilige entsprechende Vielzahl von optischen Netzwerkendgeräten (102) zu vervielfachen.

4. Extender (200) nach Anspruch 3, wobei die Vielzahl von Frequenzweichen (231) weiterhin ausgelegt ist, die Vielzahl von optischen Uplink-Drop-Signalen (255) von der jeweiligen Vielzahl optischer Drop-Übertragungskanäle (254) zu entschachteln.

5. Extender (200) nach einem der Ansprüche 3 bis 4, wobei der passive optische Punktzu-Mehrpunkt-Splitter (223) und die Vielzahl von Frequenzweichen (231) in einem gemeinsamen photonischen Lichtwellenleiter (240) implementiert sind.

6. Extender (200) eines beliebigen vorhergehenden Anspruchs, wobei der optische Punkt-zu-Punkt-Verstärker (212, 230) ein optischer Punkt-zu-Punkt Optisch-Elektrisch-Optisch-Wandler (212, 230) ist, umfassend einen Optisch-Elektrisch-Wandler (212), der ausgelegt ist zum Umwandeln des optischen Downlink-Einspeisesignals in ein elektrisches Downlink-Einspeisesignal.

7. Extender (200) nach Anspruch 6, wobei der Punkt-zu-Punkt Optisch-Elektrisch-Optisch-Wandler (212, 230) weiterhin einen Laser (230) umfasst, der ausgelegt ist zum Umwandeln des elektrischen Downlink-Einspeisesignals in ein verstärktes optisches Downlink-Einspeisesignal (251).

8. Extender (200) nach Anspruch 7, wobei der Laser (230) ein Distributed Feedback Laser ist.

9. Extender (200) nach einem beliebigen der vorhergehenden Ansprüche, wobei der Mehrpunkt-zu-Punkt-Optisch-Elektrisch-Optisch-Wandler (214, 213, 212) eine Vielzahl von Photodioden (214) umfasst, die ausgelegt sind, die Vielzahl von optischen Uplink-Drop-Signalen (255) in eine Vielzahl von elektrischen Uplink-Drop-Signalen umzuwandeln.

10. Extender (200) nach Anspruch 8, wobei die Vielzahl von Photodioden (214) PIN-Dioden sind.

11. Extender (200) nach einem beliebigen der Ansprüche 9 bis 10, wobei der elektrische Multiplexer (213) des Mehrpunkt-zu-Punkt Optisch-Elektrisch-Optisch-Wandlers (214, 213, 212) ausgelegt ist zum Entschachteln der Vielzahl von elektrischen Uplink-Drop-Signalen in ein elektrisches Uplink-Einspeisesignal.

12. Extender (200) nach Anspruch 11, wobei der Mehrpunkt-zu-Punkt Optisch-Elektrisch-Optisch-Wandler (214, 213, 212) weiterhin einen Elektrisch-Optisch-Wandler (212) umfasst, der ausgelegt ist für die Umwandlung des elektrischen Uplink-Einspeisesignals in das optische Uplink-Einspeisesignal auf dem Uplink des optischen Einspeiseübertragungskanal (250) zum optischen Leitungsendgerät (101).

13. Extender (200) nach einem beliebigen der vorhergehenden Ansprüche, wobei der optische Übertragungskanal (250) ein Glasfaserleiter ist.

14. Extender (200) nach einem beliebigen der vorhergehenden Ansprüche, wobei der optische Punkt-zu-Punkt-Verstärker (212, 230) und der Mehrpunkt-zu-Punkt Optisch-Elektrisch-Optisch-Wandler (214, 213, 212) ausgelegt sind, um eine Signalumformung durchzuführen.

15. Ein passives optisches Netzwerk, umfassend:
- ein optisches Leitungsendgerät (101);
- eine Vielzahl optischer Netzwerkendgeräte (102); und
- ein Reichweiten-Extender (200) nach einem beliebigen der Ansprüche 1 bis 14, stromabwärts des optischen Leitungsendgeräts (101) und stromaufwärts der Vielzahl von optischen Netzwerkendgeräten (102) positioniert.

## Revendications

1. Dispositif d'extension de portée point à multipoint (200) pour un réseau optique passif, comprenant
- un amplificateur optique point à point (212, 230) adapté pour amplifier un signal d'alimentation optique de liaison descendante à une entrée de l'amplificateur optique point à point (212, 230) sur un canal de transmission optique d'alimentation (250) sur une liaison descendante entre un terminal de ligne optique (101) et une pluralité de terminaux de réseau optique (102), produisant ainsi un signal d'alimentation optique de liaison descendante amplifié (251) à une sortie de l'amplificateur optique point à point (212, 230) ; et
- un convertisseur optique-électrique-optique multipoint à point (214, 213, 212) comprenant un multiplexeur électrique (213), le convertisseur optique-électrique-optique multipoint à point (214, 213, 212) étant adapté pour amplifier et multiplexer une pluralité de signaux optiques d'extraction de liaison montante (255) à une pluralité correspondante d'entrées du convertisseur optique-électrique-optique multipoint à point (214, 213, 212) sur une liaison montante entre la pluralité de terminaux de réseau optique (102) et le terminal de ligne optique (101) pour fournir un signal d'alimentation optique de ligne montante à une sortie du convertisseur optique-électrique-optique multipoint à point (214, 213, 212) sur une liaison montante du canal de transmission optique d'alimentation (250) au terminal de ligne optique (101).

2. Dispositif d'extension (200) selon la revendication 1, comprenant en outre
- un répartiteur optique passif point à multipoint (223) adapté pour distribuer le signal d'alimentation optique de liaison descendante amplifié (251) à la pluralité de terminaux de réseau optique (102), produisant ainsi une pluralité de signaux optiques d'extraction de liaison descendante (253).

3. Dispositif d'extension (200) selon la revendication 2, comprenant en outre
- une pluralité de diplexeurs (231) adaptée pour multiplexer la pluralité de signaux optiques d'extraction de liaison descendante (253) sur une pluralité de canaux de transmission optique d'extraction (254) à la pluralité respective de terminaux de réseau optique (102), respectivement.

4. Dispositif d'extension (200) selon la revendication 3, dans lequel la pluralité de diplexeurs (231) est en outre adaptée pour démultiplexer la pluralité de signaux optiques d'extraction de liaison montante (255) à partir de la pluralité de canaux de transmission optique d'extraction (254), respectivement.

5. Dispositif d'extension (200) selon l'une quelconque des revendications 3 et 4, dans lequel le répartiteur optique passif point à multipoint (223) et la pluralité de diplexeurs (231) sont exécutés sur un circuit optique photonique commun (240).

6. Dispositif d'extension (200) selon l'une quelconque des revendications précédentes, dans lequel l'amplificateur optique point à point (212, 230) est un convertisseur optique-électrique-optique point à point (212, 230) comprenant un convertisseur optique-électrique (212) adapté pour convertir le signal d'alimentation optique de liaison descendante en un signal électrique d'alimentation de liaison descendante.

7. Dispositif d'extension (200) selon la revendication 6, dans lequel le convertisseur optique-électrique-optique point à point (212, 230) comprend en outre un laser (230) adapté pour convertir le signal électrique d'alimentation de liaison descendante en un signal d'alimentation optique de liaison descendante amplifié (251).

8. Dispositif d'extension (200) selon la revendication 7, dans lequel le laser (230) est un laser à rétroaction répartie.

9. Dispositif d'extension (200) selon l'une quelconque des revendications précédentes, dans lequel le convertisseur optique-électrique-optique multipoint à point (214, 213, 212) comprend une pluralité de photodiodes (214) adaptée pour convertir la pluralité de signaux optiques d'extraction de liaison montante (255) en une pluralité de signaux électriques d'extraction de liaison montante.

10. Dispositif d'extension (200) selon la revendication 8, dans lequel la pluralité de photodiodes (214) sont des diodes PIN.

11. Dispositif d'extension (200) selon l'une quelconque des revendications 9 et 10, dans lequel le multiplexeur électrique (213) du convertisseur optique-électrique-optique multipoint à point (214, 213, 212) est adapté pour multiplexer la pluralité de signaux électriques d'extraction de liaison montante sur un signal électrique d'alimentation de liaison montante.

12. Dispositif d'extension (200) selon la revendication 11, dans lequel le convertisseur optique-électrique-optique multipoint à point (214, 213, 212) comprend en outre un convertisseur électrique-optique (212) adapté pour convertir le signal électrique d'alimentation de liaison montante en un signal d'alimentation optique de liaison montante sur la liaison montante du canal de transmission optique d'alimentation (250) en direction du terminal de ligne optique (101).

13. Dispositif d'extension (200) selon l'une quelconque des revendications précédentes, dans lequel le canal de transmission optique (250) est une fibre optique.

14. Dispositif d'extension (200) selon l'une quelconque des revendications précédentes, dans lequel l'amplificateur optique point à point (212, 230) et le convertisseur optique-électrique-optique multipoint à point (214, 213, 212) sont adaptés pour exécuter une remise en forme de signal.

15. Réseau optique passif comprenant :
- un terminal de ligne optique (101) ;
- une pluralité de terminaux de réseau optique (102) ; et
- un dispositif d'extension de portée (200) selon l'une quelconque des revendications 1 à 14, positionné en aval du terminal de ligne optique (101) et en amont de la pluralité de terminaux de réseau optique (102).
